# EUROPEAN PATENT APPLICATION

(11) **EP 2 733 888 A1**
(43) Date of publication of application: **21.05.2014**
(21) Application number: 12811662.1
(22) Date of filing: 10.04.2012
(51) Int. Cl.: H04L 12/16, H04L 12/12

(54) **METHOD FOR DEVICE DISCOVERY AND METHOD FOR DOWNLOADING CONTENT**

(30) Priority: 12.07.2011 US 201161506638 P
(71) Applicant: LG Electronics Inc., Yeongdeungpo-gu Seoul 150-721 (KR)
(72) Inventor: LEE, Min Soo, Seoul 137-130 (KR); CHO, Hyeon Cheol, Seoul 137-130 (KR); UHM, Yoon Sik, Seoul 137-130 (KR); PARK, Jang Woong, Seoul 137-130 (KR); YANG, Seung Ryul, Seoul 137-130 (KR); JEON, Beom Jin, Seoul 137-130 (KR); LEE, Jong Yeop, Seoul 137-130 (KR)
(74) Representative: Frenkel, Matthias Alexander
(86) International application number: PCT/KR2012/002715
(87) International publication number: WO 2013/008994

(57) **Abstract**

Disclosed are a method for device discovery and a method for downloading content. The method for device discovery enables a first device to store a recently-connected-device list comprising information about devices which were recently connected to a network, to unicast, when connected to a network, a first device discovery request to a second device on the basis of the recently-connected-device list, to receive from the second device a first device discovery response to the first unicast device discovery request, and to update the recently-connected-device list on the basis of the received first device discovery response. Accordingly, rapid and effective device discovery can be implemented.

## Description

### [Technical Field]

The present invention relates to a method for device discovery and a method for downloading content and, more particularly, to device discovery technology in which device discovery can be performed rapidly and efficiently and technology in which content can be easily downloaded based on device discovery and a capability exchange in an association network between devices, such as a home network.

### [Background Art]

Recently, as data communication standards and the standardization of a terminal are carried out and devices become intelligent, a need to construct a more efficient and convenient system by associating a plurality of devices and services with each other is increased. A representative example that complies with such a need is a home network. A home network associates devices and services that are distributed at several places, such as information home appliances, wireless communication devices, and Personal Computer (PC)-related devices, with each other through wired or wireless communication.

A home network can provide a content sharing environment in which content can be shared between devices. Various basis techniques are used in an implementation of such a home network. For example, Universal Plug and Play (UPnP) may be said to be one of the basic techniques. UPnP is a kind of protocol standard in which plug & play used for access between a PC and peripheral devices has been extended to all networks. In UPnP, when devices are connected to a network, the devices can automatically recognize them based on the Internet and a web protocol.

In general, when a device accesses a network in a home network environment, the device discovers other devices within the network and performs device discovery for obtaining information on the devices. Korean Patent Laid-Open Publication No. 2008-0105975 discloses a method of discovering UPnP devices using resource information. For example, a device that accesses a network can perform device discovery by multicasting a discovery request message to other devices within the network based on a Simple Service Discovery Protocol (SSDP) and receiving response messages from the respective devices.

In such conventional device discovery, however, a delay time taken for device discovery is long because a discovery message is transmitted using a multicasting scheme. Accordingly, the time that is taken for a device that has accessed a network to recognize other devices associated with the network and to display other recognized devices is very great. Furthermore, the conventional device discovery has a problem in that it causes a significant load for a network due to the transmission of a multicast message and the transmission of a corresponding response message.

Accordingly, there is an urgent need to develop technology in which device discovery can be performed rapidly and efficiently and various types of service can be provided based on such device discovery in an association network system between local devices, such as a home network.

### [Disclosure]

### [Technical Problem]

The present invention has been invented from such a background, and an object of the present invention is to provide a method for device discovery, a basic apparatus for the method, etc., wherein device discovery can be performed rapidly and efficiently in various network systems that support an association between local devices.

Furthermore, another object of the present invention is to provide a method for downloading content, a basic apparatus for the method, and so on, wherein content download service can be provided based on device discovery and a capability exchange.

### [Technical Solution]

In order to achieve the objects, in an aspect, the present invention provides a method for device discovery. The method for device discovery is performed by a first device, and the method including steps of storing a recently connected device list including information on a device which is recently connected to a network; unicasting a first device discovery request to a second device based on the recently connected device list, when connected to the network; receiving, from the second device, a first device discovery response responding to the first device discovery request; and updating the recently connected device list, based on the received first device discovery response.

The method for device discovery may further include a step of updating an active device list that describes at least one device in an active state based on the received first device discovery response.

The method for device discovery may further include steps of multicasting a second device discovery request; receiving a second device discovery response responding to the second device discovery request from a third device; and updating the recently connected device list based on the received third device discovery response.

The method for device discovery may further include a step of displaying the updated connected device list based on the received first device discovery response.

The recently connected device list may include at least one of a friendly name of the second device; an access address of the second device; a port number for accessing to the second device; a last connected time lastly connected to the second device; and a last connected network access type of the second device.

Meanwhile, in order to achieve the objects, in another aspect, the present invention provides an apparatus for device discovery. The apparatus for device discovery may include a storage and a manager to store a recently connected device list including information on a device recently connected to a network in the storage, unicast a first device discovery request to a second device based on the recently connected device list, when the device is connected to the network, receive a first device discovery response responding to the first unicast device discovery request from the second device, and update the recently connected device list based on the received first device discovery response.

The manager may update an active device list describing at least one device in an active state based on the received first device discovery response. The manager may multicast a second device discovery request, receive a second device discovery response responding to the second device discovery request from a third device, and update the recently connected device list based on the received third device discovery response.

Meanwhile, in order to achieve the objects, in yet another aspect, the present invention provides a method for downloading content. The method for downloading content is performed by a first device, and the method may include steps of performing device discovery with a second device; transmitting a device capability request requesting device capability of the second device to the second device; receiving a device capability response responding to the device capability request from the second device; and transmitting a queue request of requesting to download content from a specific entity, based on the received device capability response. The method for downloading content may further include a step of storing a recently connected device list including information on a device which is recently connected to the network.

The step of performing the device discovery with the second device may include steps of unicasting a first device discovery request to a second device, based on the recently connected device list; receiving a first device discovery response responding to the first unicast device discovery request from the second device; and updating the recently connected device list based on the received first device discovery response.

Meanwhile, in order to achieve the objects, in yet another aspect, the present invention provides an apparatus for downloading content. The apparatus for downloading content may include a device manager to perform a device discovery with a second device, transmit a device capability request requesting a device capability of the second device to the second device, and receive a device capability response responding to the device capability request from the second device and a queue manager to transmit a queue request requesting to download content from a specific entity, based on the received device capability response.

The device manager may store a recently connected device list including information on a device recently connected to a network in a storage. The device manager may unicast a first discovery request to the second device based on the recently connected device list, receive a first device discovery response responding to the first unicast device discover request from the second device, and update the recently connected device list based on the received first device discovery response.

### [Advantageous Effects]

As described above, in accordance with the present invention, in various network systems supporting an association between devices, such as a home network, a company network, and a hot spot, device discovery can be efficiently performed based on a recently connected device list, and connected devices can be rapidly displayed to a user. Furthermore, various scenarios of content download service can be easily provided based on device discovery and a capability exchange.

### [Description of Drawings]

FIG. 1 is a block diagram showing the construction of a content service system that is capable of realizing device discovery and content download in accordance with a preferred embodiment of the present invention.
FIG. 2 is a block diagram for illustrating a detailed structure and related interfaces of a client device of the content service system.
FIG. 3 shows a table for illustrating the interfaces shown in FIG. 2.
FIG. 4 is a flowchart for illustrating a method for device discovery in accordance with a preferred embodiment of the present invention.
FIG. 5 shows a table for illustrating the structure of a recently connected device list.
FIG. 6 is an exemplary diagram showing the structure of a unicast device discovery message used in a unicast device discovery request or response.
FIG. 7 shows a content download procedure based on device discovery and a device capability exchange.
FIG. 8 shows a content download procedure based on a device capability exchange between a content server and an intermediate device.
FIG. 9 shows an example of a table for illustrating the structure of device capability.

### [Mode for Invention]

The present invention may be modified in various ways and may have several embodiments, and specific embodiments are to be illustrated in the drawings and described in detail.

However, it is not intended to limit the present invention to a specific embodiment, and it should be understood that the embodiment includes all changes, equivalents, and substitutions that are included in the spirit and technical scope of the present invention.

Terms, such as the first and the second, may be used to describe a variety of elements, but the elements should not be limited by the terms. The terms are used to only distinguish one element from the other element. For example, a first element may be named a second element, and likewise a second element may be named a first element without departing from the scope of the present invention. A term 'and/or' includes a combination of a plurality of related and described items or any one of a plurality of related and described items.

When it is said that one element is described as being 'connected' to or 'coupled' with the other element, the one element may be directly connected to or coupled with the other element, but it should be understood that a third element may be interposed between the two elements. In contrast, when it is said that one element is described as being 'directly connected' to or 'directly coupled' with the other element, it should be understood that a third element is not present between the two elements.

Terms used in this application are used to describe only specific embodiments and are not intended to limit the present invention. An expression of the singular number should be understood to include plural expressions, unless clearly expressed otherwise in the context. Terms, such as 'include' or 'have', should be understood to indicate the existence of a described characteristic, number, step, operation, element, part, or a combination of them and understood to not exclude the existence of one or more other characteristics, numbers, steps, operations, elements, parts, or a combination of them or a possibility addition of them.

All terms used herein, including technical or scientific terms, have the same meanings as those typically understood by those skilled in the art unless otherwise defined. Terms, such as ones defined in common dictionaries, should be construed as having the same meanings as those in the context of related technology and should not be construed as having ideal or excessively formal meanings unless clearly defined in this application.

Hereinafter, preferred embodiments of the present invention are described in more detail with reference to the accompanying drawings. In describing the present invention, in order to help general understanding, the same reference numerals are used to denote the same elements throughout the drawings and a redundant description of the same elements is omitted.

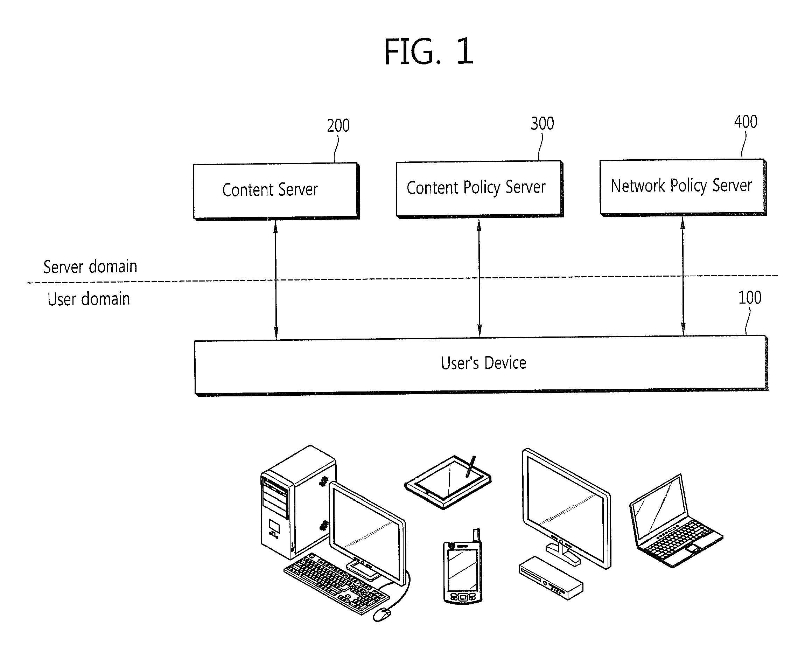

FIG. 1 is a block diagram showing the construction of a content service system that is capable of realizing device discovery and content download in accordance with a preferred embodiment of the present invention.

As shown in FIG. 1, the content service system may be divided into a server domain and a user domain.

The server domain can operate a service, a network policy, etc. for content service and provide content to the user domain based on the policy. That is, the server domain may mean a domain that includes servers for providing content service. Such a server domain can perform the providing of content to the user domain, the operation of service for the user domain, and so on, such as the production, selling, distribution, policy operation, and rights limit of content.

The server domain may include a content server 200 for providing content, a content policy server 300 for operating policies for content services, a content policy server 400 for operating a network policy, etc.

The user domain may include the devices 100 of users. The devices 100 may be fixed type terminals, for example, a PC and a set-top box or may be portable terminals, for example, a smart phone, a portable phone, a mobile handset, a tablet, a Personal Digital Assistance (PDA), and a notebook. The devices 100 can access a local network based on UPnP, a DLNA, and so on and can operate in conjunction with each other through wired or wireless communication.

The device 100 of a user may be a client device or an intermediate device.

The client device may mean a physical hardware device that is equipped with at least one network interface and a local storage. For example, the client device may be a mobile handset, a tablet, a smart phone, a PC or the like which can consume content. The client device CD may include modules for being supplied with content service.

The intermediate device may be a dual role client/server device on a network that may be used for the stage of assets destined for a client device. The intermediate device can temporarily hold an asset until the asset is delivered to a client device. In general, the intermediate device does not directly consume content, but may directly consume content.

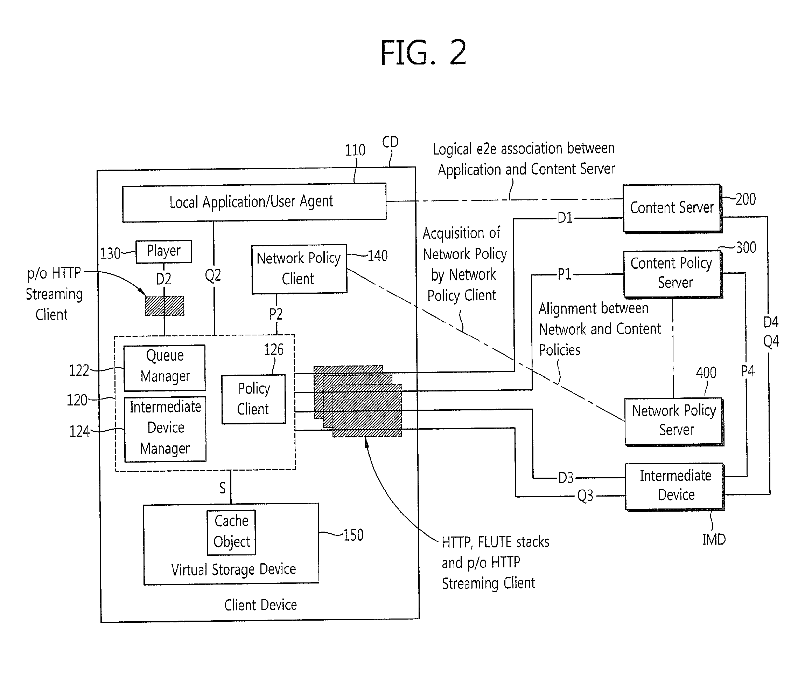

FIG. 2 is a block diagram for illustrating a detailed structure and related interfaces of a client device of the content service system.

As shown in FIG. 2, the client device CD may include a local application 110, a player 130, a network policy client 140, a virtual storage device 150, a service client 120, and so on.

The local application 110 may mean an application for content service. For example, the local application 100 may be a user agent that provides a user interface, a service menu, service selection, content selection, etc. for allowing a user to be supplied with content service. Accordingly, the local application 110 may also be called a user agent.

The player 130 is for playing back content provided through content service and may be, for example, a media player capable of playing back download content or streaming content. The network policy client 140 can obtain a network policy while communicating with the network policy server 400 and control the client device CD according to the obtained network policy

The virtual storage device 150 is a representation of a local depository that may be accessed through a cache object. For example, the virtual storage device 150 may be a common local depository, such as a hard disk, USB memory connected to a device, flash memory, a virtual region, such as Demon, and so on.

The service client 120 is a module included in the client device CD and can perform communication through interface protocols P1, S, D1, D2, Q2, D3, and Q3. The service client 120 can maintain a queue on behalf of each local application 110 and the content server 200, can interface with storage, and can be responsible for synchronizing a queue request with a policy.

Such a service client 120 may include a queue manager 122, a policy client 126, an intermediate device manager 124, etc.

The queue manager 122 can operate a queue for the download or streaming of content. For example, the queue manager 122 may include a stream queue manager and a download manager. The queue manager 122 may send a queue request to the intermediate device IMD and receive a corresponding response from the intermediate device IMD or may receive a queue request from the intermediate device IMD and send a corresponding response. For example, the queue manager 122 may send a queue request, requesting the intermediate device IMD to download specific content from the content server 200, to the intermediate device IMD and receive a corresponding response. The queue manager 122 may send a queue request, requesting the intermediate device IMD to send content downloaded from the content server 200 to the client device CD, to the intermediate device IMD.

The policy client 126 is a subsystem of the service client 120, and it maintains a policy object. The policy client 126 can control the service client 120 according to policies from the content policy server 300. For example, the policy client 126 can retrieve policies from the content policy server 300 and adjust a queue request behavior.

The intermediate device manager 124 can manage the intermediate devices IMD that operates in conjunction with the client device CD. For example, the intermediate device manager 124 can discover the intermediate device IMD connected to a network and manage the state of the intermediate device IMD. The intermediate device manager 124 can send or receive necessary messages to or from an intermediate device.

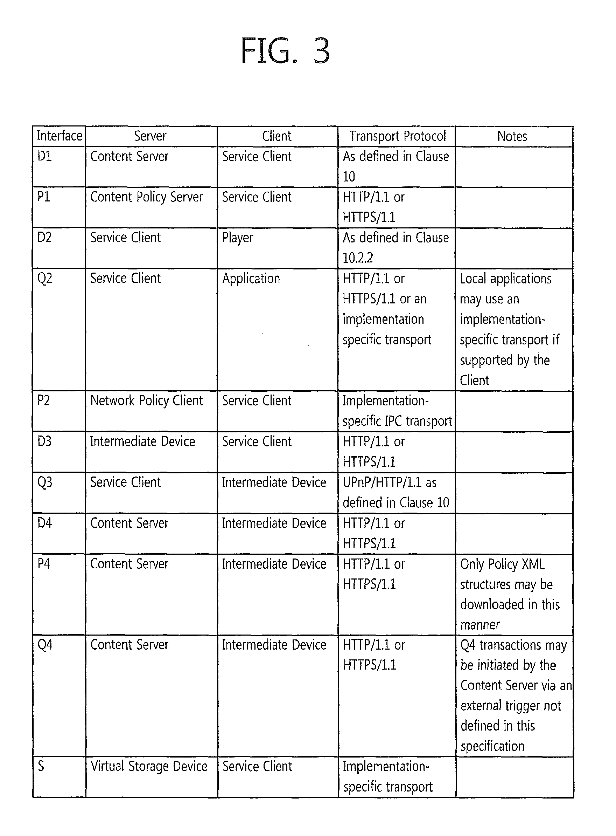

FIG. 3 shows a table for illustrating the interfaces shown in FIG. 2.

As shown in FIG. 3, interfaces related to the content service system may be classified into P, Q, S, and D interface groups. Each of the interfaces can operate in a client-server structure.

The P interface group can define a link and policy between the service client 120 and the content policy server 300. Such a P interface group may include the interfaces P1 and P2. In the interface P1, a server may be the content policy server 300 and a client may be the service client 120. In the interface P2, a server may be the network policy client 140 and a client may be the service client 120. In the interface P4, a server may be the content server 200 and a client may be the intermediate device IMD.

The Q interface group can define queue request handling. The Q interface group may be a primary command channel that associates the content server 200, the intermediate devices IMD and the service client 120 with each other. The Q interface group can allow a caching functionality to be called by the local application 110. In the Q2 interface, a server may be the service client 120 and a client may be the local application 110. In the Q3 interface, a server may be the service client 120 and a client may be the intermediate device IMD. In the Q4 interface, a server may be the content server 200 and a client may be the intermediate device IMD.

The S interface group can abstract storage and a cache capability to a service client. In the S interface, a server may be the virtual storage device 150 and a client may be the service client 120.

The D interface group can be used for the transmission of data. In the interface D1, a server may be the content server 200 and a client may be the service client 120. In the interface D2, a server may be the service client 120 and a client may be the player 130. In the interface D3, a server may be the intermediate device IMD and a client may be the service client 120. In the interface D4, a server may be the content server 200 and a client may be the intermediate device IMD.

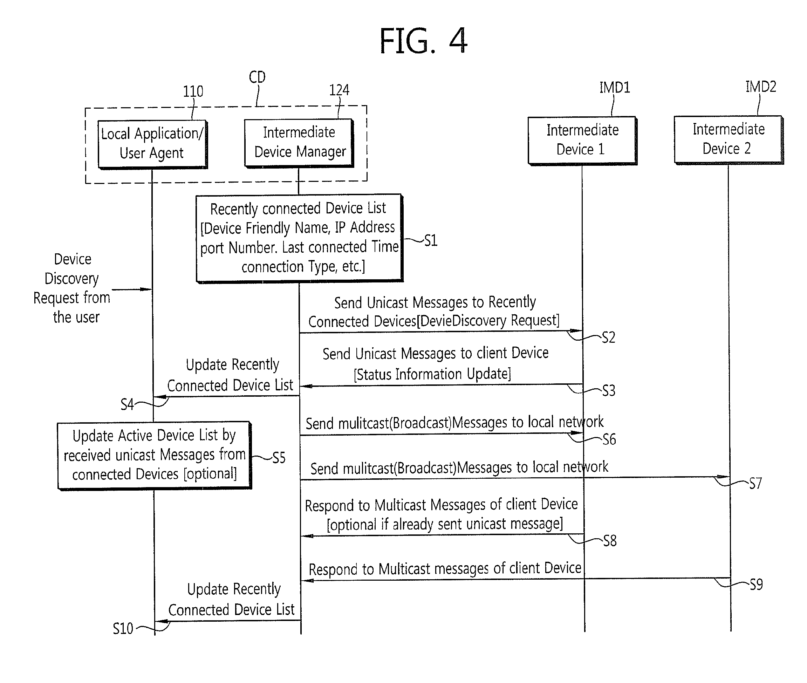

FIG. 4 is a flowchart for illustrating a method for device discovery in accordance with a preferred embodiment of the present invention. FIG. 4 illustrates a process of discovering, by the client device CD, intermediate devices IMD connected to a network in the content service system.

As shown in FIG. 4, the intermediate device manager 124 of the client device CD manages a recently connected device list (step: S1). The recently connected device list may mean a list of devices (e.g., an intermediate device or another client device) that had recently been connected to the client device CD over a local network.

The recently connected device list may be stored in the storage of the client device CD, for example, in the virtual storage device 150. For example, the client device CD can generate a recently connected list using information obtained through device discovery when first accessing a network, store the recently connected list in the storage, and thereafter continue to update the recently connected list based on information about devices which is obtained whenever the client device CD performs device discovery.

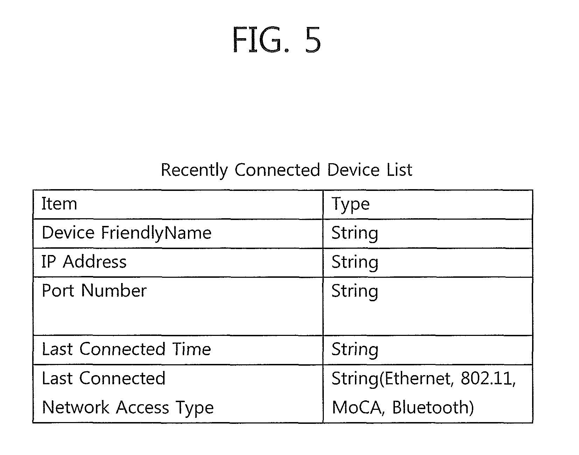

FIG. 5 shows a table for illustrating the structure of the recently connected device list.

As shown in FIG. 5, the recently connected device list may include items, such as a device friendly name, an IP address, a port number, the last connected time, and the last connected network access type of each device.

The device friendly name, the IP address, and the port number may be pieces of string type information indicative of the friendly name, IP address, and port of a device, respectively. The last connected time may indicate, for example, the time when a signal was last transmitted to and received from a device. The last connected network access type may mean a connection type indicating that the client device had accessed a network according to what method of the device. For example, the last connected network access type may be string type information indicative of at least any one of Ethernet, 802.11, MoCA, Bluetooth, ZigBee, and so on.

Meanwhile, the recently connected device list may include a device description. The device description may be access information on which information about a device, such as device capability, can be accessed, for example, an URI or an URL. When performing device discovery, the client device CD may obtain capability information about a device using the URI, URL or the like of the device description.

Device discovery performed by the client device CD may be automatically started when the client device CD accesses a local network or may be started in response to a device discovery request from a user to the local application 110.

First, the client device CD can unicast unicast device discovery request messages to devices having recently connected histories within a network based on the recently connected device list. For example, in the description of the present embodiment, it is assumed that information about the first intermediate device IMD1 is included in the recently connected device list. The client device CD can unicast a unicast device discovery request message to the first intermediate device IMD1 based on the recently connected device list (step: S2).

Each of the devices that have received the unicast device discovery request messages can send a unicast device discovery response message, that is, a response to the unicast device discovery request message, to the client device CD. For example, the first intermediate device IMD1 that has received the unicast device discovery request message can send a unicast device discovery response message to the client device CD as a response to the unicast device discovery request message (step: S3).

The client device CD that has received the unicast device discovery response messages can update the recently connected device list based on the received unicast device discovery response messages (step: S4). For example, the intermediate device manager 124 of the client device CD can update the last connected time, the last connected network access type, etc. of the first intermediate device IMD1 into pieces of new information on the recently connected device list based on information included in the unicast device discovery response messages.

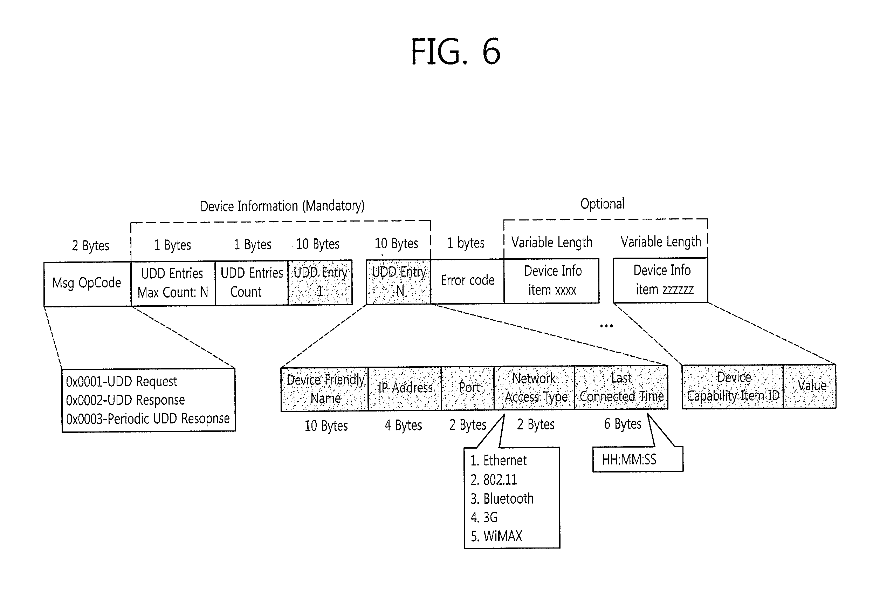

FIG. 6 is an exemplary diagram showing the structure of a unicast device discovery message used in a unicast device discovery request or response.

As shown in FIG. 6, the unicast device discovery message includes a message code field. The message code may be information that determines whether the message is a request message or a response message.

Furthermore, the unicast device discovery message includes at least one unicast device discovery entry field. The unicast device discovery entry field may include a device friendly name field into which a device friendly name is inserted, an IP address field into which an IP address is inserted, a port number field into which a port number is inserted, a last connected type field into which the last connected time is inserted, a network access type field into which a network access type is inserted, etc.

Furthermore, the unicast device discovery message may include a device information item field. The device information item field can be used to obtain various pieces of information about a device discovered by the client device CD, for example, the first intermediate device IMD1. For example, the client device CD can insert information to be obtained, for example, information about a device capability item into the device information item field of the unicast device discovery request message and send the unicast device discovery request message to the first intermediate device IMD1.

In response thereto, the first intermediate device IMD1 can insert the requested information about the first intermediate device IMD1 into the device information item field of the device discovery response message and send the device discovery response message to the client device CD. In response thereto, the client device CD can update the information about the first intermediate device IMD1 based on the received information about the first intermediate device IMD1.

Meanwhile, the client device CD that has updates the recently connected device list in response to the unicast device discovery response message can update an active device list (step: S5). The active device list may be information indicative of network devices that are now in an active state. For example, since the first intermediate device IMD1 that has sent the unicast device discovery response message is now in an active state, the client device CD can update the active state of the first intermediate device IMD1 in the active device list.

The local application 110 of the client device CD may display the updated active device list or the updated recently connected device list on a screen of the client device CD. Accordingly, a user can rapidly check devices on the network which are now available through the active device list or the recently connected device list displayed on the screen of the client device CD.

Meanwhile, the client device CD can multicast (or broadcast) a multicast device discovery request message to the devices that have accessed the network. For example, the client device CD may send the multicast device discovery request message to the first intermediate device IMD1 and the second intermediate device IMD2 (steps: S6, S7).

Assuming that the second intermediate device IMD2 is not present in the recently connected devices, the second intermediate device IMD2 has not yet been discovered by the client device CD. Accordingly, the second intermediate device IMD2 may send a multicast device discovery response message to the client device CD in response to the multicast device discovery message that has been received from the client device CD (step: S9). The first intermediate device IMD1 may send a multicast device discovery response message to the client device CD, but may not send the multicast device discovery response message to the client device CD if the first intermediate device IMD1 has already sent a unicast message to the client device CD (step: S8).

The client device CD can update the recently connected device list based on the received multicast device discovery response message (step: S10). For example, the intermediate device manager 124 of the client device CD may newly add information about the second intermediate device IMD2 to the recently connected device list.

Furthermore, the client device CD may update the active device list based on the received multicast device discovery response message. The local application 110 may display the newly updated active device list or the updated recently connected device list on a screen of the client device CD.

As described above, in accordance with a preferred embodiment of the present invention device discovery, the client device CD manages devices that had recently been connected through a recently connected device list. When performing device discovery, the client device CD can rapidly discover devices within a recently connected device list based on unicast by checking the recently connected device list. Accordingly, a user can first check available network devices rapidly before completing device discovery based on multicast.

The device discovery may also be applied to various network systems based on Universal Plug and Play (UPnP), Digital Living Network Alliance (DLNA), and so on in addition to the illustrated content service system.

For example, a DLNA device, for example, a Digital Media Controller (DMC) commonly discovers almost the same devices whenever performing device discovery in the same network domain, for example, in a home network or an office domain. This is because devices that belong to a home network or an office domain, for example, a Digital Media Server (DMS) and a Digital Media Renderer (DMR) are almost fixed. Accordingly, in such a system, device discovery according to the present invention can be very efficient.

A DMC can store device information that includes a device profile and a description file connected to a network domain. The device information may be, for example, a recently connected device list. Although the DMC leaves the network domain, the DMC can manage the device information.

For efficient and rapid discovery, when a DMC enters a network, the DMC can send a unicast message, including a device profile, to each of devices using an IP address that has been registered with device information based on the device information. That is, the DMC performs device discovery based on the transmission of unicast messages to the IP addresses of devices that had recently been connected. Accordingly, the DMC can first display devices that had recently been connected through a user interface.

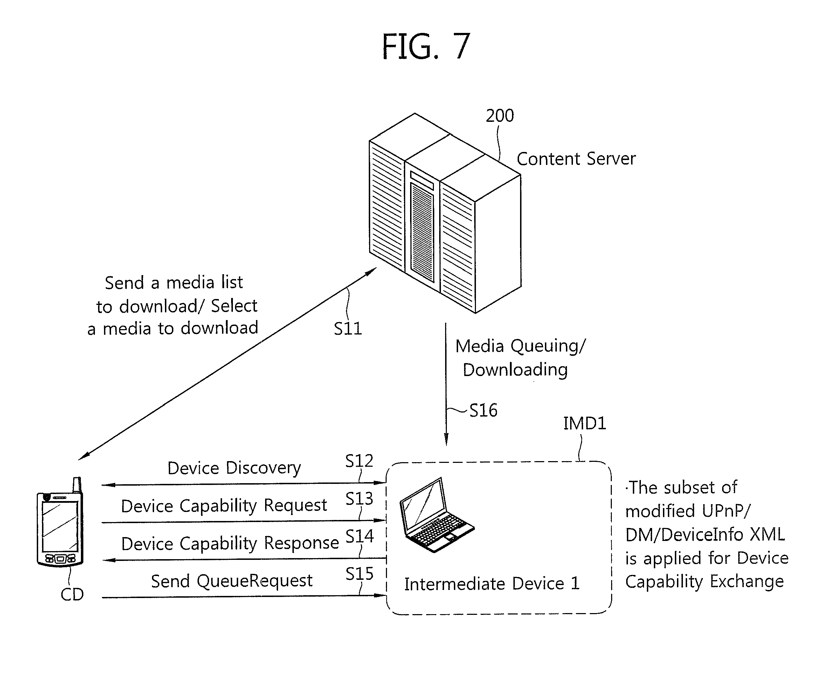

FIG. 7 shows a content download procedure based on device discovery and a device capability exchange.

As shown in FIG. 7, the client device CD can receive a content (e.g., hereinafter referred to as media) list supplied by the content server 200 and select media to download (step: S11). A user tries to download the selected media using an intermediate device connected to a network under the control of the client device CD.

The client device CD, together with the first intermediate device IMD1, can perform a device discovery procedure (step: S12). The device discovery procedure can be performed by the procedure described with reference to FIG. 4. For example, as in the aforementioned device discovery procedure, the intermediate device manager 124 of the client device CD can send a unicast device discovery request message to the first intermediate device IMD1 based on a recently connected device list and receive a unicast device discovery response message, that is, a response to the unicast device discovery request message, from the first intermediate device IMD1.

When the device discovery is completed, the intermediate device manager of the client device CD can send a device capability request message, requesting the device capability of the first intermediate device IMD1, to the first intermediate device IMD1 (step: S13). The first intermediate device IMD1 that has received the device capability request message can send a device capability response message, including the requested device capability, to the client device CD (step: S14). The device capability may be information of an Extensible Markup Language (XML) form and may include a plurality of capability items.

Meanwhile, the client device CD may obtain the device capability of the first intermediate device IMD1 when performing device discovery without a device capability request/response using the structure of the unicast device discovery message shown in FIG. 6. For example, the client device CD may insert information about device capability items to be obtained into the device information item field of a unicast device discovery request message and send the unicast device discovery request message to the first intermediate device IMD1. In such a case, the first intermediate device IMD1 may insert the requested device capability items into the device information item field of a unicast device discovery response message and send the unicast device discovery response message to the client device CD. Accordingly, the device capability of the first intermediate device IMD1 can be transferred to the client device CD through a device discovery procedure. In such a case, an additional device capability request and response procedure may be omitted.

The client device CD that has obtained the device capability of the first intermediate device IMD1 sends a queue request, requesting the first intermediate device IMD1 to download the selected media from a specific entity based on the device capability, to the first intermediate device IMD1 (step: S15). For example, the queue manager of the first intermediate device IMD1 may send the queue request to the first intermediate device IMD1 via the interface Q3.

The queue request may include access information on which the first intermediate device IMD1 can download an asset suitable for the capability of the first intermediate device IMD1, for example, a media file. The queue request may include an identifier (ID) for identifying the selected media, access information on which the asset to be substantially downloaded in accordance with the selected media, for example, a media file can be identified and accessed, and so on. For example, assuming that the identifier of the media is information that identifies a movie "Avatar", the access information may be information for identifying and accessing a physical "Avatar file" to be actually downloaded. For example, the access information may include information of a URL, URI, or file name form.

That is, the client device CD transfers information on which a media file suitable for the capability of the first intermediate device IMD1 can be downloaded to the first intermediate device IMD1 through the queue request.

For example, the client device CD may check a storage capacity and storage usage of the first intermediate device IMD1, a media profile, etc. using the device capability of the first intermediate device IMD1 which is received from the first intermediate device IMD1 and transfer a request to download media, corresponding to a size supportable by the first intermediate device IMD1 and a media profile supportable by the first intermediate device IMD1, to the first intermediate device IMD1 through the queue request.

The first intermediate device IMD1 that has received such a queue request can access the content server based on the information included in the queue request and can download a media file which corresponds to the selected media and is suitable for the first intermediate device IMD1 from the content server (step: S16).

Meanwhile, the client device CD may determine whether or not to send the queue request depending on whether or not a specific device capability of the first intermediate device IMD1 satisfies a policy that is managed by the client device CD based on the policy. For example, the policy client 140 of the client device CD may store and manage a policy received from the content policy server 300. The policy client 140 can determine whether or not a specific device capability received from the first intermediate device IMD1 satisfies a specific policy, control the queue manager 122 so that the queue manager 122 sends a queue request to the first intermediate device IMD1 if the specific device capability satisfies the specific policy, block the queue request if the specific device capability does not satisfy the specific policy, and output an error message through the local application 110, etc.

For example, the client device CD may check a storage capacity and storage usage of the first intermediate device IMD1 using device capability received from the first intermediate device IMD1 and check whether or not the size of a media file to be downloaded that is allowed in a policy is smaller than the remaining storage size of the first intermediate device IMD1. If the size of the media file to be downloaded is greater than the remaining storage size of the first intermediate device IMD1, the client device CD outputs an error message and may not send a queue request.

For example, assuming that a network access type allowed in a policy is only Wi-Fi (802.11), the client device CD may check a network access type of the first intermediate device IMD1 using device capability received from the first intermediate device IMD1. If Wi-Fi (802.11) is not present in the network access type of the first intermediate device IMD1, the client device CD may output an error message and block a queue request.

For example, if a policy allows download only when the first intermediate device IMD1 has a power level of 50% or more, the client device CD may not send a queue request if a power level of the device capability of the first intermediate device IMD1 is less than 50%. For example, if a policy allows download only when the first intermediate device IMD1 has a supporting media profile of 'HD', the client device CD may not send a queue request of the first intermediate device IMD1 has a supporting media profile of 'PD' or'SD'.

Meanwhile, for example, assuming that a maximum number of queue requests of the device capability of the first intermediate device IMD1 is 3, if the current number of queue requests of the device capability of the first intermediate device IMD1 is 2 or less, the client device CD may send a queue request to the first intermediate device IMD1. If the current number of queue requests is 3 equal to the maximum number of queue requests, the client device CD may not send a queue request.

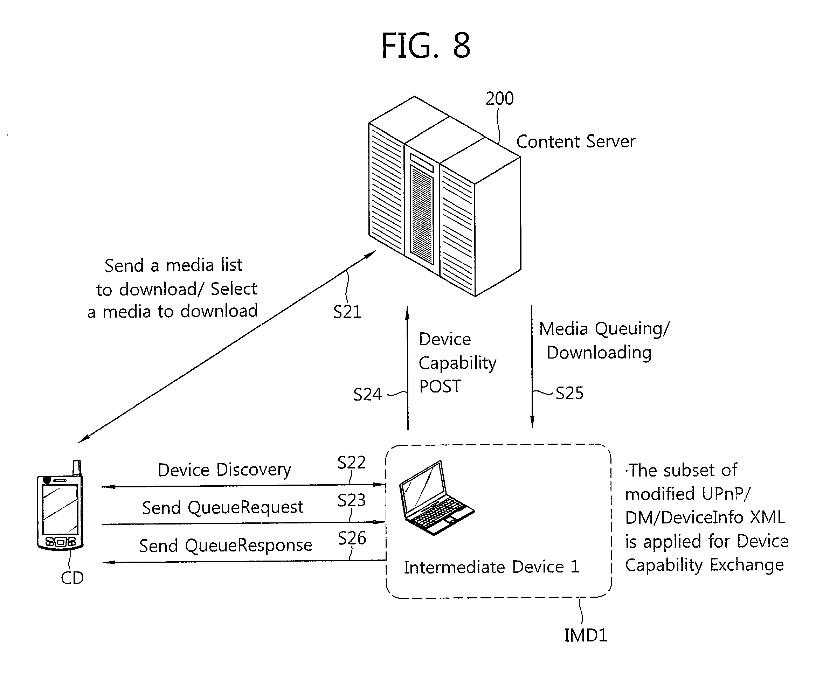

FIG. 8 shows a content download procedure based on a device capability exchange between the content server and the intermediate device.

As shown in FIG. 8, the client device CD can receive a content (e.g., hereinafter referred to as media) list supplied by the content server and select media to be downloaded (step: S21). The client device CD tries to download the selected media using an intermediate device connected to a network.

The client device CD, together with the first intermediate device IMD1, can perform a device discovery procedure (step: S22). The device discovery procedure can be performed by the procedure described with reference to FIG. 4. For example, as in the aforementioned device discovery procedure, the intermediate device manager of the client device CD may send a unicast device discovery request message to the first intermediate device IMD1 based on a recently connected device list and receive a unicast device discovery response message from the first intermediate device IMD1 as a response to the unicast device discovery request message.

When the device discovery is completed, the client device CD sends a queue request, requesting the first intermediate device IMD1 to download the selected media from a specific entity, to the first intermediate device IMD1 (step: S23). For example, the queue manager of the first intermediate device IMD1 may send the queue request to the first intermediate device IMD1 via the Q3 interface. The queue request may include the identifier of the media, access information that is necessary for the first intermediate device IMD1 to download an asset corresponding to the media, and so on.

The first intermediate device IMD1 that has received such a queue request accesses the content server based on the information included in the queue request and sends the device capability of the first intermediate device IMD1 to the content server (step: S24). The content server can download a media file suitable for the first intermediate device IMD1 to the first intermediate device IMD1 based on the device capability (step: S25).

Meanwhile, the content server 200 may determine whether or not to send the queue request for download depending on whether or not a specific device capability of the first intermediate device IMD1 satisfies a policy managed by the content policy server 300 based on the policy. For example, the content server 200 may check a storage capacity and storage usage of the first intermediate device IMD1 using device capability received from the first intermediate device IMD1 and check whether or not the size of a media file to be downloaded that is allowed in a policy is smaller than the remaining storage size of the first device IMD1. If the size of the media file to be downloaded is greater than the remaining storage size of the first intermediate device IMD1, the content server 200 may not send a queue request. In such a case, the content server 200 may send an error message to the client device CD or the first intermediate device IMD1. Likewise, the content server 200 may determine whether or not to send a queue request by checking device capability received from the first intermediate device IMD1 based on various items, such as a network access type, a power level, a supporting media profile, etc. of a policy.

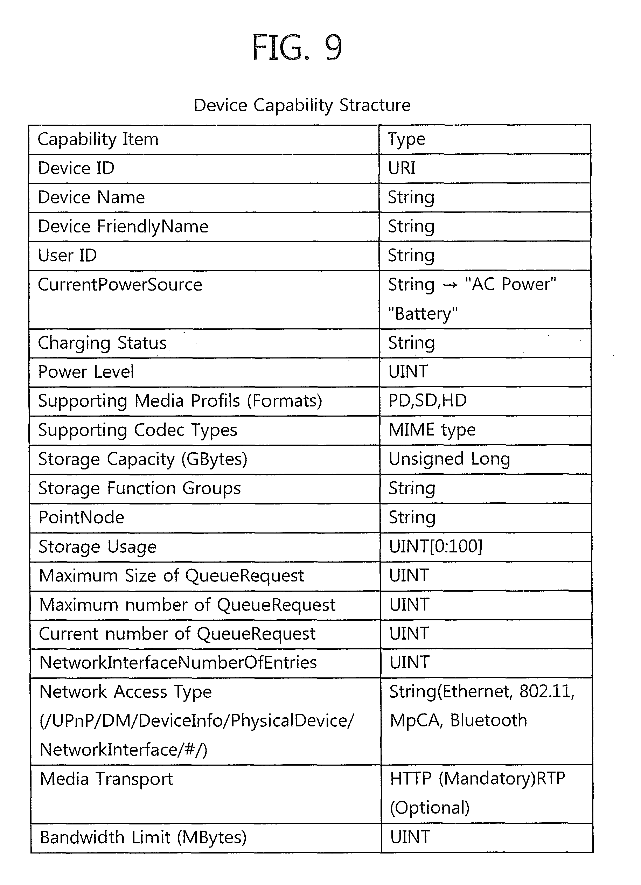

FIG. 9 shows an example of a table for illustrating the structure of device capability. The device capability described in the aforementioned contents, for example, the descriptions given with reference to FIGS. 7 to 8 may have a device capability structure shown in FIG. 9.

As shown in FIG. 9, the device capability may include capability items, such as a device ID, a device name, a device friendly name, a user ID, a current power source, a charging status, a power level, supporting media profiles, supporting codec types, a storage capacity, storage function groups, a point node, a storage usage, a maximum size of a queue request, a maximum number of queue requests, the current number of queue requests, the network interface number of entries, a network access type, a media transport, and a bandwidth limit.

The device ID may mean an ID that identifies a device globally and uniquely. A value of the device ID may be string type information. The device name may mean a universally unique ID for a device. A value of the device name may be, for example, string type information. The device friendly name is a short description for an end user, and a value of the device friendly name may be string type information. The user ID is an ID that identifies an end user, and a value of the user ID may be string type information.

The current power source is a description indicative of a current power source of a device, and a value of the current power source may be a string. A value of the current power source may be set as, for example, "AC Power" indicating that a device is supplied with AC power, "batter" indicating that a device is supplied with power from a battery, or the like. Assuming that a device is supplied with AC power from an AC source, a value of the current power source may be set as 'AC Power". I a device is supplied with power from a battery, a value of the current power source may be set as 'battery'.

The charging status is a capability item indicative of a current charging status of a battery, and a value of the charging status may be string type information. A value of the charging status may be set as 'Available' meaning that a battery has been installed in a device and the installed battery is working, 'Charging' meaning that a battery has been installed in a device and the battery is being charged, 'Unavailable' meaning that a battery has not been installed in a device, 'Error' indicating that a battery has been installed in a device, but the battery does not correctly perform a function, or the like.

The power level may indicate a current power level of a battery. For example, a value of the power level may be a percentage value. For example, '0' may mean that a battery has been fully discharged or a battery has not been installed. '100' may mean that a battery has been fully charged.

The supporting media profiles may indicate a media profile type that may be supported. A value of the supporting media profiles is string type information and may be set as, for example, 'HD' meaning High Definition (HD), 'SD' meaning Standard Definition (SD), 'PD' meaning Portable Definition (PD), or the like.

The supporting codec types is a list of supported codec types, and a value of the supporting codec types may be string type information. The storage capacity may indicate an available amount of storage.

The storage function groups indicates the storage of a device, for example, a function group related to a virtual storage device, and a value of the storage function groups may be string type information. A value of the function groups may be 'access control', 'capacity management', 'expiration', 'transformation', 'playlist', or the like.

The 'access control' indicates an access control function group that intermediates between different applications that use a virtual storage device. The access control function group can preclude, for example, a specific application from accessing content associated with another application.

The 'capacity management' may indicate a capacity management function group on which a virtual storage device enables a corresponding storage space to be managed based on priority. The capacity management group may discard an asset having lower priority in order to make a room for an asset having higher priority, for example, if the asset having higher priority is downloaded.

The 'expiration' may indicate an expiration function group on which a virtual storage device enables content to be stored based on a specific date range. The 'transformation' may indicate a transformation function group that allows a transformative operation while content is read or written from a virtual storage device.

The 'playlist' may indicate a playlist function group on which a virtual storage device enables a playlist to be processed. If a playlist function group is present, a playlist can be used in group objects.

Meanwhile, the storage usage may indicate the current available amount of storage. A value of the storage usage may be a percentage value. For example, if a value of the storage usage is '0', it may mean that storage is completely unoccupied. If a value of the storage usage is '100', it may mean that storage is fully occupied.

The maximum size of a queue request, the maximum number of queue requests, the current number of queue requests, and the network interface number of entries may indicate a maximum size of a queue request, a total number of queue requests that may be presented for a given time, the current number of queue requests other than a complete state, and the number of network interfaces, respectively.

The network access type may indicate an available network access interface type. A value of the network access type may be string type information. A value of the network access type may be, for example, 'Ethernet', '801.11', 'Bluetooth', or '3G' 'WiMAX'.

The media transport may indicate a transport protocol type that is supported for the interfaces D3, D4, and D1. A value of the media transport may be, for example, 'HTTP' or 'RTP'. The bandwidth limit may indicate an available bandwidth of a network interface.

Although the embodiments of the present invention have been described above, those skilled in the art will appreciate that the present invention may be modified in various ways without departing from the spirit and scope of the present invention defined in the appended claims. Accordingly, a possible change of the embodiments of the present invention will not depart from the technology of the present invention.

## Claims

1. A method for device discovery, performed by a first device, comprising steps of:
storing a recently connected device list including information on a device which is recently connected to a network;
unicasting a first device discovery request to a second device based on the recently connected device list, when connected to the network;
receiving, from the second device, a first device discovery response responding to the first device discovery request; and
updating the recently connected device list, based on the received first device discovery response.

2. The method of claim 1, further comprising a step of updating an active device list describing at least one device in an active state based on the received first device discovery response.

3. The method of claim 1, further comprising steps of:
multicasting a second device discovery request;
receiving a second device discovery response responding to the second device discovery request from a third device; and
updating the recently connected device list based on the received third device discovery response.

4. The method of claim 1, further comprising a step of displaying the updated connected device list based on the received first device discovery response.

5. The method of claim 1, wherein the recently connected device list comprises at least one of:
a friendly name of the second device;
an access address of the second device;
a port number for accessing to the second device;
a last connected time lastly connected to the second device; and
a last connected network access type of the second device.

6. An apparatus for device discovery, comprising:
a storage; and
a manager to store a recently connected device list including information on a device recently connected to a network in the storage, unicast a first device discovery request to a second device based on the recently connected device list, when the device is connected to the network, receive a first device discovery response responding to the first unicast device discovery request from the second device, and update the recently connected device list based on the received first device discovery response.

7. The apparatus of claim 6, wherein the manager updates an active device list describing at least one device in an active state based on the received first device discovery response.

8. The apparatus of claim 6, wherein the manager multicasts a second device discovery request, receives a second device discovery response responding to the second device discovery request from a third device, and updates the recently connected device list based on the received third device discovery response.

9. A method for downloading content, performed by a first device, comprising steps of:
performing device discovery with a second device;
transmitting a device capability request requesting device capability of the second device to the second device;
receiving a device capability response responding to the device capability request from the second device; and
transmitting a queue request of requesting to download content from a specific entity, based on the received device capability response.

10. The method of claim 9, further comprising a step of storing a recently connected device list including information on a device which is recently connected to the network.

11. The method of claim 10, wherein the step of performing the device discovery with the second device comprises steps of:
unicasting a first device discovery request to a second device, based on the recently connected device list;
receiving a first device discovery response responding to the first unicast device discovery request from the second device; and
updating the recently connected device list based on the received first device discovery response.

12. An apparatus for downloading content, comprising:
a device manager to perform a device discovery with a second device, transmit a device capability request requesting a device capability of the second device to the second device, and receive a device capability response responding to the device capability request from the second device; and
a queue manager to transmit a queue request requesting to download content from a specific entity, based on the received device capability response.

13. The apparatus of claim 12, wherein the device manager stores a recently connected device list including information on a device recently connected to a network in a storage.

14. The apparatus of claim 12, wherein the device manager unicasts a first discovery request to the second device based on the recently connected device list, receives a first device discovery response responding to the first unicast device discover request from the second device, and updates the recently connected device list based on the received first device discovery response.
